# FASCICULE DE BREVET EUROPEEN

(11) **EP 0 914 198 B1**
(45) Date de publication et mention de la délivrance du brevet: **12.04.2000**
(21) Numéro de dépôt: 97934583.2
(22) Date de dépôt: 17.07.1997
(51) Int. Cl.: B01J 3/04, B01J 19/02

(54) **REACTEUR ET PROCEDE D'HYDROGENATION**
HYDRIERUNGREAKTOR UND-VERFAHREN
HYDROGENATION METHOD AND REACTOR

(30) Priorité: 22.07.1996 LU 88792
(43) Date de publication de la demande: 12.05.1999
(73) Titulaire: COMMUNAUTE EUROPEENNE DE L'ENERGIE ATOMIQUE (EURATOM), L-2920 Luxembourg (LU)
(72) Inventeur: MANOLATOS, Panagiotis, F-75015 Paris (FR); MORRISSEY, James, Gérard, NL-1862 BG Bergen (NL); HURST, Roger, Christopher, NL-1862 CZ Bergen (NL)
(74) Mandataire: Le Roux, Martine
(86) Numéro de dépôt international: FR9701330
(87) Numéro de publication internationale: WO9803255

(56) Documents cités:
- EP-A- 0 367 584
- GB-A- 1 044 007
- GB-A- 2 135 901
- US-A- 3 647 103
- PATENT ABSTRACTS OF JAPAN vol. 004, no. 158 (M-039), 5 novembre 1980 & JP 55 107190 A (BABCOCK HITACHI KK), 16 août 1980,

## Description

La présente invention a pour premier objet un nouveau type de réacteur d'hydrogénation. Elle concerne également les procédés d'hydrogénation mis en oeuvre au sein d'un tel réacteur et plus généralement les utilisations d'un tel réacteur.

Ladite invention a été développée dans le contexte des réactions d'hydrogénation en phase gazeuse, généralement mises en oeuvre à haute température et sous forte pression d'hydrogène, dans des réacteurs à parois épaisses. On rencontre notamment de tels réacteurs dans les installations des industries chimiques et pétrochimiques. Ils constituent en particulier le coeur des unités d'hydrocraquage des raffineries pétrolières modernes.

Lesdits réacteurs ont leurs parois principalement constituées d'un acier ferritique faiblement allié (généralement du type 2,25 Cr-1 Mo) et peuvent être amenés à travailler dans des conditions aussi sévères que sous 170 bars de pression d'hydrogène, (17.10⁶ Pa), à 450 °C. Certains d'entre eux présentent des parois d'une épaisseur d'environ 300 mm et peuvent peser jusqu'à plus de 1 000 tonnes .

Lesdits réacteurs doivent en effet être conçus pour résister, dans leurs conditions d'utilisation, à la fois au fluage et à l'attaque par l'hydrogène. Ce sont ces deux types de phénomènes dommageables, entre lesquels ne manquent pas de se créer une synergie, qui limitent les conditions d'utilisation desdits réacteurs et qui imposent la nature du matériau constituant les parois desdits réacteurs ainsi que l'épaisseur desdites parois. On note incidemment ici que le caractère plus ou moins corrosif du milieu réactionnel est également, bien évidemment, à prendre aussi en compte.

On précise que l'attaque par l'hydrogène se traduit au niveau de la structure des parois du réacteur, à la fois par une décarburation superficielle desdites parois et par l'apparition, dans l'épaisseur desdites parois, de poches de méthane; ledit méthane résultant de la réaction chimique entre l'hydrogène atomique qui a diffusé au travers desditcs parois et le carbone et/ou les carbures présent(s) dans l'acier constitutif desdites parois. Au sein desdites poches de méthane, la pression est extrêmement élevée et il est ainsi généré, dans l'épaisseur des parois du réacteur, de fortes contraintes. De telles contraintes accentuent les effets néfastes du fluage et il apparaît alors des fissurations intergranulaires.

L'homme du métier n'ignore rien des dommages inhérents à l'attaque par l'hydrogène duc à la diffusion dudit hydrogène au travers des parois métalliques de réacteurs. On précise d'ores et déjà ici que ladite diffusion est principalement le fait de l'hydrogène atomique . En effet, la molécule d'hydrogène (ainsi que toute autre molécule) est trop grosse pour pénétrer dans la structure de l'acier. L'absorption de l'hydrogène dans ladite structure nécessite donc une étape préalable de dissociation de la molécule en hydrogène atomique; ledit hydrogène atomique étant lui suffisamment petit pour pénétrer et diffuser au sein de l'acier. Ladite dissociation de l'hydrogène moléculaire en hydrogène atomique dépend évidemment des conditions de température et de pression d'intervention dudit hydrogène moléculaire.

L'autre phénomène dommageable : le fluage, est d'autant plus important que la température, au sein du réacteur, est plus élevée.

Les réacteurs couramment utilisés à ce jour comportent généralement un revêtement interne, en acier inoxydable austénitique, d'une épaisseur de l'ordre de 10 mm, accolé à leurs parois épaisses, en acier ferritique. Un tel revêtement est avant tout prévu pour protéger de la corrosion lesdites parois épaisses. Il n'élimine pas les dommages dont est responsable l'hydrogène. En effet, ledit revêtement diffère certes quelque peu la décarburation de surface desdites parois mais intervient malencontreusement, à plusieurs niveaux, dans la mesure où :
- du fait que l'hydrogène est très soluble dans sa structure (en acier austénitique), il constitue une source d'hydrogène pour les parois épaisses (en acier ferritique) à son contact; ceci même après la fin des opérations d'hydrogénation;
- l'interface générée entre ledit revêtement et les parois épaisses auxquelles il est accolé constitue une zone très sensible. Ladite interface constitue non seulement une tête de pont pour l'hydrogène qui, après avoir diffusé au travers dudit revêtement, continue sa diffusion au travers desdites parois épaisses, avec les conséquences néfastes déjà décrites; mais aussi un piège pour ledit hydrogène, qui, dans les défauts de cette interface, trouve place pour se recombiner et générer alors des poches de gaz - hydrogène moléculaire, méthane - sous pression. Lesdites poches de gaz facilitent le décollement du revêtement.

Il est aussi à noter que ladite interface souffre des contraintes créées par la dilatation thermique différentielle des aciers constitutifs respectivement des parois épaisses et du revêtement, lors des évolutions de température. Lesdites contraintes participent elles-aussi au décollement du revêtement ;
- ledit revêtement, en acier austénitique, présente par ailleurs un faible coefficient de diffusion pour l'hydrogène et freine ainsi la désorption de l'hydrogène des parois épaisses, à l'issue des opérations d'hydrogénation. Ceci impose la mise en oeuvre d'une procédure spéciale de refroidissement, très lente, pour éviter cette fois-ci, une fragilisation de l'acier par l'hydrogène qui se manifeste, d'ailleurs préférentiellement au niveau de l'interface, par décollement dudit revêtement.

Dans un tel contexte, au jour d'aujourd'hui, on est en permanence à la recherche d'un compromis, dans le choix de l'acier à utiliser pour des parois de réacteurs d'hydrogénation. On préconise certes d'utiliser des aciers à faible teneur en carbone, pour minimiser la réaction dudit carbone avec l'hydrogène, mais encore faut-il que lesdits aciers contiennent suffisamment de carbone pour présenter les propriétés mécaniques requises, pour présenter une résistance au fluage suffisante. En fait, on stabilise le carbone desdits aciers en faisant intervenir des carbures (de chrome, molybdène, vanadium, par exemple). En pratique, on sélectionne, en prenant en compte les paramètres température et pression d'hydrogène d'utilisation desdits réacteurs, des aciers convenables à l'aide des Courbes de Nelson (API 941). Ces courbes, familières à l'homme du métier, présentent la résistance en température et pression d'hydrogène de différents types d'acier. Ces courbes ont été établies empiriquement.

Lesdits aciers étant ainsi sélectionnés (en fonction des températures et pressions d'hydrogène auxquelles ils vont être soumis), on surdimensionne toujours les réacteurs, en tenant compte de la présence d'hydrogène et on limite en fait leur température d'utilisation, pour des raisons évidentes de sécurité. On garnit par ailleurs, comme précisé ci-dessus, lesdits aciers d'un revêtement interne anticorrosion.

Actuellement, on cherche à mettre au point de nouvelles générations d'aciers qui permettraient aux réacteurs de travailler dans des conditions de température et de pression d'hydrogène encore plus sévères, ceci pour obtenir de meilleurs rendements de réaction. Toutes les recherches sont principalement orientées sur le comportement des aciers en environnement hydrogénant (en présence de l'hydrogène absorbé). (Le comportement de l'interface en présence d'hydrogène lors des évolutions de température (thermocyclage) est aussi un sujet de recherche d'actualité).

On a décrit, dans le brevet GB-A-1,044,007, un réacteur qui présente une paroi interne, une paroi externe et au moins une paroi intermédiaire qui partage en plusieurs compartiments l'espace délimité entre lesdites parois interne et externe; lesdits compartiments renfermant un matériau isolant, perméable aux gaz et étant maintenus en communication aussi bien entre eux qu'avec le milieu réactionnel. La circulation d'un gaz - CO₂ , par exemple - est prévue dans lesdits compartiments, de l'extérieur vers le milieu réactionnel. Au sein d'une telle structure, la paroi externe n'est toutefois pas isolée du milieu réactionnel et il existe des pièces mécaniques - fond et couvercle du réacteur - susceptibles de constituer des ponts pour la diffusion de l'hydrogène atomique du milieu réactionnel vers la paroi externe ...

On a décrit, dans le brevet GB-A-2 135 901, un autre type de réacteur multi-parois. Il est prévu, pour le fonctionnement de ce type de réacteur en milieu hydrogénant, un espace entre la paroi interne et la première paroi intermédiaire, ouvert sur l'extérieur, pour l'évacuation, à l'atmosphère, de l'hydrogène. On note toutefois que le système proposé n'évite pas l'attaque, par l'hydrogène, des parois adjacentes et de la paroi externe, dans la mesure où :
- de manière générale, les parois sont solidarisées par soudure ; lesdites soudures constituant des ponts pour la diffusion de l'hydrogène atomique ;
- l'espace créé, entre ladite paroi interne et ladite paroi intermédiaire, ne saurait résister aux conditions sévères de fonctionnement de réacteurs d'hydrogénation.

Ces deux types de réacteur de l'art antérieur ont leur structure optimisée, plus en référence au problème de l'isolation thermique qu'à celui de l'attaque des parois par l'hydrogène atomique.

Confrontés à ce problème technique de l'optimisation des parois de réacteurs d'hydrogénation en référence au problème de l'attaque par l'hydrogène atomique, les inventeurs ont conçu une structure originale pour lesdites parois. Ladite structure, bi-composante, permet de décaler dans l'espace, de dissocier, les deux phénomènes dommageables que sont le fluage et l'attaque par l'hydrogène. Ladite structure permet également de dissocier la notion de température de fonctionnement du réacteur de celle de température de la paroi externe. Ces deux points seront mieux compris à la considération de la description de ladite structure originale qui suit.

Les réacteurs d'hydrogénation de la présente invention comportent une double paroi. Ladite double paroi consiste en une paroi externe, apte à supporter les charges mécaniques et en une paroi interne, délimitant le volume réactionnel au sein duquel est appelé à réagir le milieu réactionnel; ladite paroi interne résistant audit milieu réactionnel et protégeant ladite paroi externe de tout contact avec celui-ci. En cela, les réacteurs de l'invention paraissent structurellement proches des réacteurs existants à ce jour; réacteurs dont les parois épaisses (externes) sont recouvertes intérieurement d'un revêtement de protection.

Toutefois, l'analogie de structure est relativement limitée dans la mesure où les parois interne et externe des réacteurs de l'invention ne sont pas accolées. Au sein de la structure desdits réacteurs de l'invention, on a aménagé un espace entre lesdites parois interne et externe; ledit espace étant prévu pour la recombinaison contrôlée de l'hydrogène atomique appelé à diffuser au travers de ladite paroi interne (de l'hydrogène atomique, qui, lors de l'utilisation du réacteur, aura diffusé au travers de ladite paroi interne) et ne renfermant aucun moyen susceptible d'assurer la diffusion dudit hydrogène atomique de ladite paroi interne vers ladite paroi externe (moyen susceptible de constituer, pour ledit hydrogène atomique, un pont entre ladite paroi interne et ladite paroi externe). Par ailleurs, on trouve, dans la structure desdits réacteurs de l'invention, des moyens pour, lors de l'utilisation desdits réacteurs :
- équilibrer les pressions de part et d'autre de ladite paroi interne (stabiliser ladite paroi interne); de sorte que celle-ci ne supporte pas de contrainte mécanique;
- permettre la circulation et l'évacuation dudit espace, aménagé entre les parois interne et externe, de l'hydrogène y ayant accédé. Ledit hydrogène est évacué vers l'extérieur. On vise, dans le cadre d'une utilisation avantageuse des réacteurs de l'invention, à maintenir, dans ledit espace, une pression en hydrogène aussi faible que possible. On vise, en tout état de cause, à ne pas créer dans ledit espace un environnement hydrogénant, du type du milieu réactionnel.

Les moyens assurant l'équilibrage des pressions ainsi que la circulation et l'évacuation de l'hydrogène peuvent être identiques ou différents.

L'homme du métier aura déjà saisi tout l'intérêt d'une telle structure, bi-composante : en son sein, pas de problème d'interface et comme indiqué ci-dessus, décalage dans l'espace des phénomènes de fluage et d'attaque par l'hydrogène. En effet, la paroi interne n'étant pas sollicitée mécaniquement, on peut pour sa conception faire abstraction du fluage et la paroi externe étant protégée de l'hydrogène (dans la mesure où la paroi interne constitue un obstacle au passage de celui-ci et où surtout d'une part, l'hydrogène atomique qui aura malgré tout diffusé au travers de ladite paroi interne sera recombiné en hydrogène moléculaire, donc neutralisé, dans l'espace, prévu à cet effet, entre lesdites parois interne et externe et d'autre part, l'accumulation dudit hydrogène moléculaire, dans ledit espace, sera évité par la circulation et l'évacuation de celui-ci), on peut pour sa conception faire abstraction de l'attaque par ledit hydrogène.

Par ailleurs, l'espace ménagé entre lesdites parois interne et externe crée une interruption au transfert thermique par conduction; interruption aux conséquences intéressantes.

Dans une telle structure :
- la paroi interne est dispensée de présenter des caractéristiques mécaniques élevées;
- la paroi externe est isolée de l'hydrogène "agressif", protégée de l'hydrogène en général et on peut donc optimiser sa composition (teneur en carbone, en divers additifs) et son épaisseur en faisant abstraction dudit hydrogène, en ne prenant en compte que le fluage ;
- ladite paroi externe peut être portée à une température inférieure à celle de ladite paroi interne (du fait de l'interruption du transfert thermique par conduction) ; ce qui a des conséquences évidentes sur sa résistance au fluage ;
- on ne rencontre plus les problèmes d'interface (évoqués en préambule), lors du refroidissement.

On rappelle ici que ledit hydrogène "agressif" est principalement constitué d'hydrogène atomique : H. C'est surtout ledit hydrogène atomique (on ne saurait toutefois exclure la présence conjointe d'ions H⁺, voire H⁻ ... ) qui est susceptible de diffuser au travers des parois et de réagir en leur sein avec le carbone entrant dans leur composition. La molécule H₂ est elle per se quasi inoffensive (du fait qu'elle ne peut pénétrer dans la structure métallique) ... d'où l'intérêt (qui n'aura pas échappé à l'homme du métier) de l'espace ménagé entre les parois interne et externe des réacteurs de l'invention; espace dit de recombinaison contrôlée dudit hydrogène "agressif" (H). Au sein dudit espace, l'hydrogène atomique, qui a diffusé au travers de la paroi interne, est recombiné en hydrogène moléculaire et se trouve donc piégé, neutralisé. L'hydrogène ne peut pénétrer dans l'épaisseur de la paroi externe sans une nouvelle dissociation. Ladite paroi externe se trouve donc protégée dudit hydrogène atomique, tant que la pression en hydrogène moléculaire dans ledit espace reste suffisamment faible pour éviter toute nouvelle dissociation. La protection de ladite paroi externe est avantageusement optimisée par le maintien, dans ledit espace, d'une pression en hydrogène très faible. Ce résultat peut être obtenu, comme cela sera précisé plus avant dans le présent texte, par les moyens destinés à évacuer (vers l'extérieur), dudit espace, l'hydrogène y ayant accédé.

L'homme du métier saura, sans difficulté particulière, maîtriser le dimensionnement dudit espace, dans tel ou tel contexte. On précise, à titre indicatif, que la largeur de celui-ci est généralement comprise entre 1 et 50 cm, avantageusement entre 1 et 10 cm. Ladite largeur est à optimiser pour l'obtention des effets escomptés (recombination de l'hydrogène atomique, diminution de la température de la paroi externe), pour l'équilibrage à moindre coût des pressions de part et d'autre de la paroi interne, pour bien accommoder les dilatations thermiques, et pour limiter l'encombrement global du réacteur.

Le concept de la dissociation des parois interne et externe, pour générer l'espace de recombinaison de l'hydrogène atomique (dissociation qui entraîne aussi une interruption du transfert thermique par conduction), ayant été, selon l'invention, mis au point, il peut être matérialisé selon diverses variantes.

On peut notamment trouver simplement lesdites parois interne et externe séparées par ledit espace, non compartimenté. On peut également trouver, en sus desdites parois interne et externe, au moins une paroi additionnelle qui partage ledit espace en au moins deux chambres (coaxiales). Dans cette hypothèse, on prévoit les moyens adéquats pour que, lors de l'utilisation du réacteur, les pressions de part et d'autre de ladite paroi additionnelle soient équilibrées et que l'hydrogène, ayant accédé à chacune desdites chambres, puisse circuler et être évacué vers l'extérieur. Ladite paroi additionnelle est du type de la paroi interne en ce qu'il n'est nullement nécessaire qu'elle présente des caractéristiques mécaniques élevées. On note toutefois qu'elle est quant à elle également dispensée de présenter une résistance particulière à la corrosion dans la mesure où elle n'est pas au contact du milieu réactionnel. Ladite paroi additionnelle est bien évidemment coaxiale aux parois interne et externe. L'intervention d'au moins une telle paroi additionnelle peut se révéler avantageuse pour notamment constituer un obstacle supplémentaire à la diffusion de l'hydrogène atomique et au transfert thermique, rendre moins coûteux l'équilibrage des pressions de part et d'autre de la paroi interne et permettre le choix du matériau constitutif de ladite paroi interne en faisant abstraction de sa perméabilité à l'hydrogène, en ne prenant en compte que ses propriétés de résistance à la corrosion et d'inertie vis-à-vis de l'hydrogène. Selon une variante avantageuse de l'invention, on associe ainsi à une paroi interne résistante à la corrosion et perméable à l'hydrogène au moins une paroi additionnelle caractérisée par sa faible perméabilité à l'hydrogène (voire avantageusement par sa faible conductivité thermique).

Ladite paroi interne ainsi que l'(les) éventuelle(s) paroi(s) additionnelle(s) intervenant sont stabilisées dans la structure des réacteurs de l'invention. Elles peuvent notamment être solidarisées entre elles et avec la paroi externe par l'intermédiaire d'entretoises. On veillera à ce que lesdites entretoises ne constituent pas des ponts pour l'hydrogène atomique.

D'une manière générale, on rappelle que ledit espace entre les parois interne et externe ne renferme aucun moyen susceptible d'assurer la diffusion de l'hydrogène atomique, de constituer un pont pour ledit hydrogène atomique. Dans ce contexte, pour le montage mécanique, on fait appel à des astuces de montage et/ou on fait intervenir des pièces en des matériaux non conducteurs de l'hydrogène atomique. Un tel montage peut notamment comporter des parties consommables, sacrifiées (parties de la paroi externe, par exemple). Un tel montage peut aussi être optimisé pour minimiser le transfert thermique de la paroi interne vers la paroi externe. Pour ledit montage mécanique, on prend bien évidemment en compte les dilatations thermiques que sont appelées à subir les matériaux lors de l'utilisation desdits réacteurs.

Pour ce qui concerne les moyens destinés à assurer, lors de l'utilisation du réacteur, l'équilibrage des pressions de part et d'autre de ladite paroi interne et le cas échéant de part et d'autre de la(des)dite(s) paroi(s) additionnelle(s), ils peuvent également exister selon différentes variantes.

Selon une première variante, on fait avantageusement intervenir dans l'espace ménagé entre les parois interne et externe, le cas échéant dans chacune des chambres dudit espace - espace (chambres) maintenu(es) libre(s) - , un fluide d'équilibrage de pression et lesdits moyens comprennent au moins un orifice d'amenée dudit fluide d'équilibrage. Ledit orifice d'amenée peut également servir d'orifice de vidange dudit fluide, lorsque celui-ci doit être remplacé, en discontinu (pour l'évacuation de l'hydrogène dont il s'est chargé). Ledit orifice d'amenée peut, selon une autre variante, être associé à au moins un orifice de sortie dudit fluide d'équilibrage. On peut ainsi aménager au moins un orifice d'amenée et au moins un orifice de sortie dudit fluide d'équilibrage de pression; ledit fluide pouvant ainsi être renouvelé en continu ou en discontinu. Lesdits orifices sont en communication, par l'intermédiaire de moyens adéquats, avec respectivement des dispositifs d'alimentation, de récupération et éventuellement de purification dudit fluide. L'intervention dudit fluide, en circulation continue ou renouvelé en discontinu (avec éventuellement recyclage, après purification) permet d'assurer l'évacuation dudit espace libre de l'hydrogène y ayant accédé. Les moyens - orifice(s) - mentionnés ci-dessus pour assurer l'équilibrage de pression permettent ainsi, également, dans le cadre de cette première variante de l'invention, d'assurer ladite évacuation de l'hydrogène vers l'extérieur.

Les réacteurs de l'invention comportent donc, dans le cadre de cette variante :
- une paroi interne, destinée à être au contact du milieu réactionnel d'une part et d'un fluide d'équilibrage de pression d'autre part ;
- éventuellement, au moins une paroi additionnelle, destinée à être au contact sur ses deux faces d'un(de) fluide(s) d'équilibrage de pression ;
- une paroi externe, destinée à être au contact d'un fluide d'équilibrage de pression et à supporter la pression;
lesdites parois n'étant pas en contact direct l'une avec l'autre; un espace libre étant aménagé entre celles-ci.

Dans le cadre de cette première variante de l'invention, la structure des réacteurs présente, entre les parois interne et externe, un espace libre (éventuellement compartimenté en chambres libres) et inclut des moyens - orifice(s), convenablement disposé(s) - qui permettent, mis en oeuvre avec un fluide, d'assurer, à la fois, l'équilibrage des pressions de part et d'autre de ladite paroi interne, voire de part et d'autre de paroi(s) additionnelle(s) (ladite paroi interne et l'(les) éventuelle(s) paroi(s) additionnelle(s) intervenant étant ainsi maintenu(es), lors de l'utilisation du réacteur, dans des conditions de pression hydrostatique) et la circulation et l'évacuation vers l'extérieur de l'hydrogène ayant accédé audit espace libre, voire auxdites chambres de celui-ci.

Cette évacuation, qui peut être mise en oeuvre en continu ou en discontinu (voir plus loin) l'est avantageusement pour maintenir, dans ledit espace libre, voire dans chacune des chambres le constituant, une pression partielle en hydrogène aussi faible que possible; en tout état de cause une faible pression en hydrogène. On minimise ainsi tout risque de nouvelle dissociation dudit hydrogène moléculaire et donc d'absorption d'hydrogène atomique dans la paroi externe.

Dans le cadre de cette première variante, le fluide d'équilibrage de pression peut, le cas échéant, être utilisé comme fluide de refroidissement.

Selon une seconde variante, on fait intervenir d'autres moyens pour l'équilibrage des pressions de part et d'autre de la paroi interne et le cas échéant de part et d'autre de la(des) paroi(s) additionnelle(s). On peut notamment faire intervenir une structure rigide, présentant une forte porosité ouverte, en un matériau dans lequel l'hydrogène atomique est très faiblement soluble, dans ledit espace entre ladite paroi interne et la paroi externe, le cas échéant dans chacune des chambres dudit espace. Ladite structure rigide - un solide - stabilise ladite paroi interne et le cas échéant la (les) paroi(s) additionnelle(s) . Elle est en un matériau dans lequel l'hydrogène atomique est très faiblement soluble. Il convient de minimiser, et mieux d'éviter, tout transfert, de la paroi interne vers la paroi externe, au sein de ladite structure, (via ledit matériau) dudit hydrogène atomique. Elle présente par ailleurs une forte porosité ouverte (les pores communiquent entre eux et débouchent à l'extérieur de la structure). Il convient en effet de permettre en son sein la recombinaison de l'hydrogène atomique et la circulation de l'hydrogène moléculaire. Ladite porosité joue, dans le cadre de cette seconde variante de l'invention, le même rôle que l'espace libre dans le cadre de la première variante, en termes de recombinaison contrôlée de l'hydrogène. Pour l'évacuation dudit hydrogène, on prévoit de combiner ladite structure avec des moyens adéquats. On prévoit notamment au moins un orifice mettant en communication ledit espace, "rempli de ladite structure", le cas échéant chacune des chambres dudit espace "remplie de ladite structure" (on n'exclut pas du cadre de l'invention l'intervention dans lesdites chambres de structures du même type, mais différentes) avec l'atmosphère ambiante (l'extérieur). Par le biais de la porosité ouverte dudit matériau et dudit orifice, l'hydrogène peut être évacué. On prévoit avantageusement au moins deux orifices de ce type, pour optimiser ladite évacuation de l'hydrogène et avantageusement permettre la mise en place d'un balayage dudit hydrogène par un fluide mis en circulation forcée dans l'espace au sein duquel est disposé la structure poreuse, le cas échéant dans chacune des chambres dudit espace au sein desquelles est disposée ladite structure poreuse. Ledit fluide circule lui aussi grâce à la porosité ouverte du matériau.

Cette seconde variante, selon laquelle une structure rigide poreuse intervient, avec éventuellement en son sein un balayage de fluide (de faible intensité), n'est évidemment concevable que si ladite structure est suffisamment rigide pour supporter par elle-même, sans être comprimée, la pression du milieu réactionnel. Dans le cas contraire, on doit prévoir, en sus de ladite structure poreuse, non suffisamment rigide, l'intervention en son sein, d'un fluide sous pression. Ledit fluide, tout en assurant la circulation et l'évacuation de l'hydrogène, aide ladite structure poreuse, à conserver sa porosité et à maintenir la paroi interne sous pression hydrostatique. Dans ce cas de figure - intervention d'une structure poreuse rigidifiée par un fluide - on limite la quantité de fluide nécessaire (par rapport à la première variante exposée ci-dessus) et on peut optimiser l'isolation thermique.

A titre de matériau poreux rigide convenant, dans le cadre de cette seconde variante de l'invention, on peut citer, de façon nullement limitative, des matériaux céramiques et avantageusement l'alumine (ladite alumine convient également pour assurer une bonne isolation thermique).

On notera que selon cette seconde variante, les moyens d'équilibrage des pressions (structure rigide, solide) et d'évacuation de l'hydrogène peuvent être différents.

Les réacteurs de l'invention comportent donc, dans le cadre de ladite variante :
- une paroi interne, destinée à être au contact du milieu réactionnel d'une part et d'une structure rigide d'autre part;
- éventuellement, au moins une paroi additionnelle, destinée à être au contact sur ses deux faces d'une (de) structure(s) rigide(s);
- une paroi externe, en contact avec une structure rigide et destinée à supporter la pression ;
l'espace aménagé, de façon caractéristique, entre lesdites parois n'étant pas présentement un espace libre ; ledit espace présentant toutefois en son sein (via sa porosité ouverte) l'espace libre nécessaire à la recombinaison contrôlée de l'hydrogène (et la circulation dudit hydrogène recombiné).

Comme dans le cadre de la variante précédente, l'évacuation de l'hydrogène, par l'(les) orifice(s) prévu(s) à cet effet, qui peut être mise en oeuvre en continu ou en discontinu (voir plus loin) l'est avantageusement pour maintenir dans l'espace entre les parois interne et externe, voire dans chacune des chambres le constituant, une pression en hydrogène aussi faible que possible; en tout état de cause, une faible pression en hydrogène. On peut prévoir, comme indiqué ci-dessus, pour une optimisation de ladite évacuation, un balayage par un fluide. On a également vu qu'un tel fluide de balayage peut intervenir pour consolider la structure poreuse, pour mettre sous pression hydrostatique la paroi interne et éventuellement la(les) paroi(s) additionnelle(s).

On ne saurait totalement exclure du cadre de l'invention des variantes mixtes, résultant de la combinaison des première et seconde variantes exposées ci-dessus ; notamment une première variante mixte selon laquelle l'espace aménagé entre les parois externe et interne est compartimenté en plusieurs chambres; au moins l'une desdites chambres étant du type espace libre (première variante exposée ci-dessus) et au moins une autre desdites chambres étant du type espace rempli par un matériau poreux (seconde variante exposée ci-dessus) ; et une seconde variante mixte selon laquelle ledit espace ou au moins l'une des chambres dudit espace a son volume occupé, en partie seulement, par une structure poreuse ; un fluide d'équilibrage de pression intervenant alors obligatoirement dans le volume laissé libre.

En cours d'utilisation des réacteurs de l'invention, leur paroi externe est protégée de l'hydrogène et subit les contraintes mécaniques tandis que la paroi interne ne subit pas de contraintes mécaniques mais est soumise à un environnement hydrogénant et corrosif. L'(les) éventuelle(s) paroi(s) additionnelle(s) est(sont), quant à elle(s), protégée(s) du milieu réactionnel, soumise(s) à un environnement hydrogénant beaucoup moins agressif (dans la mesure où l'hydrogène a perdu en agressivité lorsqu'il atteint la(les)dite(s) paroi(s) additionnelle(s)) et non soumise(s) à des contraintes mécaniques.

Les matériaux constitutifs desdites parois et l'épaisseur de celles-ci sont, dans le cadre de l'invention, choisis en conséquence.

On préconise avantageusement, dans le but de constituer un réel obstacle à l'hydrogène, que l'une au moins des parois choisie parmi la paroi interne et le cas échéant la(les) paroi(s) additionnelle(s) soit à base d'un matériau présentant une faible perméabilité à l'hydrogène. Dans cette optique, on préconise, par exemple, de faire intervenir de l'acier inoxydable, notamment ferritique.

On insiste toutefois sur le fait que ceci ne constitue qu'une variante avantageuse et que l'intervention à ce niveau d'un matériau à plus forte perméabilité à l'hydrogène n'est pas catastrophique (n'est nullement exclue du cadre de l'invention) dans la mesure où il est prévu en tout état de cause en aval de la paroi en ledit matériau au moins un espace libre de recombinaison contrôlée de l'hydrogène atomique qui a diffusé au travers de ladite paroi et l'évacuation dudit hydrogène.(On parle bien ici de la perméabilité à l'hydrogène et non pas au milieu réactionnel).

Lesdites parois - interne et éventuellement additionnelle(s) - peuvent consister en des feuilles, de faible épaisseur, dans la mesure où elles ne sont pas sollicitées mécaniquement.

Pour ce qui concerne la paroi interne, on veille aussi évidemment à ce qu'elle présente la résistance à la corrosion requise.

Pour ce qui concerne enfin la paroi externe des réacteurs de l'invention, elle est à optimiser -matériau, épaisseur - en tenant compte du fluage à sa température de fonctionnement et non pas de la présence d'hydrogène. Elle n'a plus à être surdimensionnée, elle peut être réalisée en acier ferritique.

A performances égales, les réacteurs d'hydrogénation de l'invention présentent donc une épaisseur de leur paroi externe bien moindre que celle des parois externes des réacteurs de l'art antérieur. On insiste surtout sur le fait que lesdits réacteurs de l'invention peuvent travailler dans des conditions de température et de pression d'hydrogène plus sévères, même réalisés en des aciers classiques. Ceci permet d'augmenter le rendement des réactions mises en oeuvre en leur sein sans faire appel à des aciers spéciaux (en termes de résistance à l'attaque par l'hydrogène). Le concept de l'invention est également avantageux en ce qu'il rend possible :
- d'une part, la prolongation de la durée de vie des réacteurs, par, le cas échéant, le (seul) renouvellement de leur paroi interne,
- d'autre part, la transformation de réacteurs de l'art antérieur, éventuellement déjà en service, en réacteurs de l'invention, par notamment l'introduction en leur sein, d'une paroi interne au sens de l'invention.

On rappelle par ailleurs que le concept de l'invention permet la diminution des pertes thermiques du fait de l'interruption du transfert thermique par conduction (du fait de l'espace entre les parois) ; cette diminution pouvant encore être optimisée par l'intervention d'un matériau convenable dans l'espace entre les parois.

Selon son deuxième objet, la présente invention concerne les procédés d'hydrogénation mis en oeuvre dans un réacteur original, présentant les caractéristiques développées ci-dessus et plus précisément :
- au moins un espace pour la recombinaison contrôlée de l'hydrogène atomique entre ses parois interne et externe (ledit espace assurant également l'interruption du transfert thermique par conduction); ledit espace ne renfermant pas de moyen susceptible d'assurer la diffusion dudit hydrogène atomique de ladite paroi interne vers ladite paroi externe ;
- des moyens pour équilibrer les pressions de part et d'autre de ladite paroi interne et pour permettre la circulation et l'évacuation de l'hydrogène dudit espace.

Les procédés d'hydrogénation de l'invention peuvent notamment être mis en oeuvre selon deux variantes principales, selon la nature des moyens intervenant dans le réacteur pour stabiliser la paroi interne de celui-ci et évacuer l'hydrogène de l'espace aménagé entre ladite paroi interne et la paroi externe.

Le procédé d'hydrogénation, mis en oeuvre dans un réacteur au sein duquel l'(les) espace(s) aménagé(s) entre les parois interne, externe, voire additionnelle(s) est(sont) laissé(s) libre(s), fait intervenir un fluide, dit fluide d'équilibrage des pressions. Ledit fluide maintient, dans des conditions de pression hydrostatique, ladite paroi interne ainsi qu'éventuellement la(les)dite(s) paroi(s) additionnelle(s). Ledit fluide sert également de véhicule pour la circulation et l'évacuation vers l'extérieur de l'hydrogène.

Ledit fluide emplit, l'espace libre entre les parois interne et externe du réacteur lorsqu'il n'intervient pas de paroi additionnelle, chacune des chambres dudit espace libre lorsqu'il intervient au moins une paroi additionnelle. Dans cette seconde hypothèse, on peut faire intervenir, au moins deux fluides différents dans lesdites chambres différentes. On peut notamment faire intervenir le même fluide, à des degrés de pureté différents et/ou dans des conditions de circulation différentes.

Le(s)dit(s) fluide(s) d'équilibrage des pressions peut(peuvent) être renouvelé(s) en continu ou en discontinu. Il(s) est(sont) amené(s) par les moyens adéquats et introduit(s) par au moins un orifice d'amenée prévu à cet effet. Il(s) peut(peuvent) être soutiré(s), en discontinu, par ledit(leur) orifice d'amenée. Il(s) peut(peuvent) être soutiré(s) en continu ou en discontinu, par au moins un orifice de sortie, différent dudit(de leur) orifice d'amenée. Ledit fluide peut être recyclé, après purification. Lorsque l'espace libre entre les parois interne et externe du réacteur est divisé en plusieurs chambres, on peut, comme indiqué ci-dessus, faire intervenir le même fluide, à des degrés de pureté différents dans lesdites chambres. On peut également faire intervenir le même fluide ou des fluides différents, dans des conditions de circulation différentes. Comme déjà précisé, l'intervention du(des)dit(s) fluide(s) permet, outre le maintien de la paroi interne et, le cas échéant d'au moins une paroi additionnelle, dans des conditions de pression hydrostatique, l'évacuation de l'hydrogène ayant diffusé au travers de la(les)dite(s) paroi(s). On a également déjà vu que ledit fluide peut éventuellement intervenir à titre de fluide de refroidissement.

Le(s)dit(s) fluide(s) d'équilibrage des pressions est(sont) choisi(s) parmi les liquides ou les gaz, inertes vis-à-vis des parois avec lesquelles il(s) est(sont) en contact. Il(s) est(sont) bien évidemment exempt(s) d'oxygène, pour éviter tout risque d'explosion. Il(s) est(sont) avantageusement choisi(s) pour parfaire l'isolation thermique du milieu réactionnel (de la paroi interne du réacteur). Il(s) consiste(nt) avantageusement en un (des) gaz. Il consiste avantageusement en de l'argon.

Selon deux variantes avantageuses de ce procédé de l'invention :
- on utilise de l'argon relativement pur dans l'espace libre entre les parois interne et externe, mis en circulation continue ou discontinue;
   ou
- on utilise de l'argon mis en circulation continue dans la première chambre de l'espace libre entre les parois interne et externe, première chambre délimitée par ladite paroi interne et une paroi additionnelle et de l'argon renouvelé périodiquement (mis en circulation discontinue) dans la seconde chambre de l'espace libre entre lesdites parois interne et externe, deuxième chambre délimitée par ladite paroi additionnelle et ladite paroi externe.

Le procédé d'hydrogénation de l'invention, mis en oeuvre dans un réacteur au sein duquel l'(les) espace(s) aménagé(s) entre les parois interne, externe, voire additionnelle(s) est(sont) occupé(s) par une structure rigide poreuse (à forte porosité ouverte), ne fait pas forcément intervenir de fluide quand ladite structure rigide poreuse peut assurer l'équilibrage des pressions au niveau de la paroi interne ainsi qu'éventuellement au niveau de la (des) paroi(s) additionnelle(s). Ladite structure rigide est évidemment en un matériau qui limite au maximum la diffusion de l'hydrogène atomique. Avantageusement, ledit matériau est un bon isolant thermique. Au sein de ladite structure, une circulation "naturelle" de l'hydrogène, ayant diffusé au travers de la paroi interne (voire au travers de ladite paroi interne et d'au moins une paroi additionnelle) peut être obtenue grâce à la porosité ouverte de ladite structure et à l'(aux) orifice(s) mettant en communication ladite structure avec l'atmosphère ambiante (l'extérieur).

Toutefois, dans le cadre d'une variante avantageuse de ce procédé de l'invention, on prévoit l'intervention d'un tel fluide, pour balayer, en continu ou en discontinu, ladite structure rigide poreuse. Une évacuation plus efficace de l'hydrogène peut ainsi être obtenue.

Le fluide intervenant est avantageusement un gaz, tel l'argon. Il est avantageusement mis en circulation à une pression légèrement supérieure à la pression atmosphérique. L'homme du métier aura compris que, selon cette variante du procédé de l'invention, la pression dudit gaz n'a pas à équilibrer la pression du milieu réactionnel (dans la mesure où ladite structure rigide poreuse est suffisamment rigide). Ledit gaz n'intervient que pour évacuer l'hydrogène, pour optimiser l'auto-évacuation de celui-ci.

On rappelle ici que dans l'hypothèse où la structure poreuse qui intervient ne possède pas les propriétés mécaniques nécessaires (pour maintenir sa porosité ouverte dans les conditions de fonctionnement du réacteur), un fluide doit obligatoirement intervenir, à une pression adéquate.

Il n'est, enfin, nullement exclu du cadre de l'invention de mettre en oeuvre le procédé dans un réacteur de l'invention du type mixte (présentant au moins une chambre du type espace libre et au moins une chambre du type espace rempli par un matériaux poreux, ou présentant au moins une chambre occupée en partie seulement par un matériau poreux).

Enfin, selon son dernier objet, l'invention concerne, de manière générale, l'utilisation des réacteurs présentant les caractéristiques énoncées ci-dessus. Lesdits réacteurs sont avantageusement utilisés pour mettre en oeuvre des réactions d'hydrogénation, pour stocker de l'hydrogène ou des gaz contenant de l'hydrogène dans des conditions de température et de pression d'hydrogène sévères, pour réaliser des études physico-chimiques dans des conditions de température et de pression d'hydrogène sévères (notamment des études d'absorption d'hydrogène par des métaux).

On préconise de les utiliser dans tous les contextes où des problèmes d'attaque de parois par l'hydrogène sont susceptibles d'être rencontrés. On insiste ici sur le fait que le concept de l'invention est applicable aussi bien à l'échelle du laboratoire (réacteurs de faibles capacités) qu'à l'échelle industrielle (réacteurs de fortes capacités).

L'invention est illustrée et positionnée par rapport à son art antérieur le plus proche sur les figures annexées.

Les figures 1 et 2 schématisent un réacteur de l'art antérieur. La figure 2 est une coupe suivant II-II de la figure 1.

Les figures 3 et 4 schématisent un réacteur de l'invention, du type à espace libre (1^{ère} variante) . La figure 4 est une coupe suivant IV-IV de la figure 3.

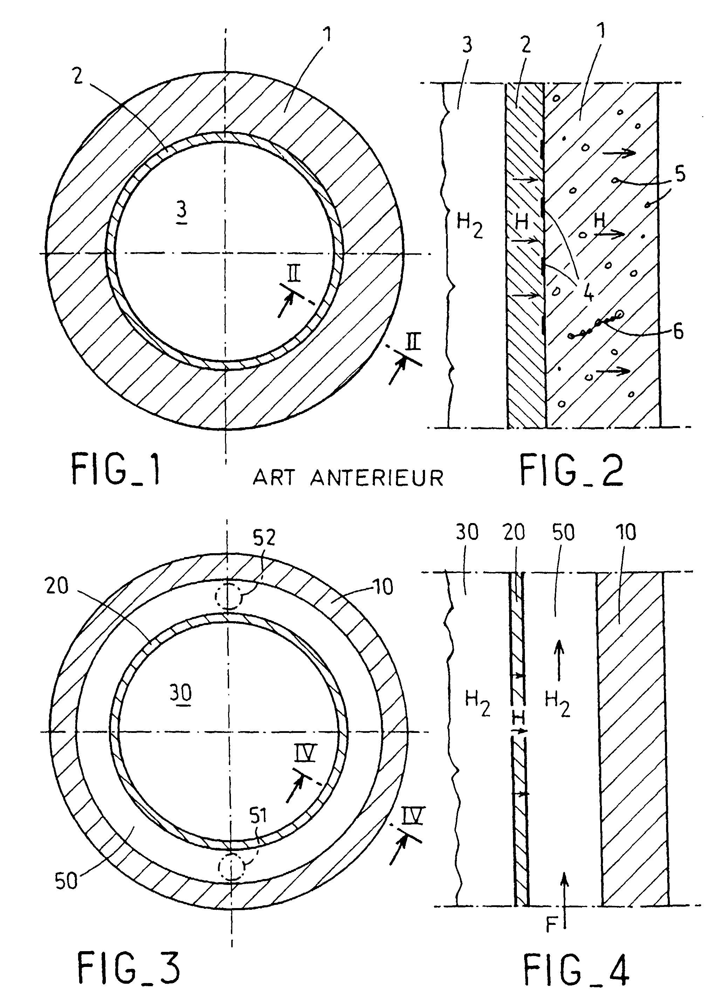

Sur lesdites figures 1 et 2, on a représenté :
- en 1, la paroi externe d'un réacteur de l'art antérieur,
- en 2, le revêtement interne de ladite paroi externe 1,
- en 3, le volume réactionnel.

Ledit revêtement 2 est accolé à ladite paroi externe 1. Il est généralement en acier inoxydable de type austénitique, donc relativement perméable à l'hydrogène atomique.

On a schématisé sur la figure 2 le type des dégâts observés lors de l'utilisation dudit réacteur de l'art antérieur. Le volume réactionnel 3 renferme des produits contenant de l'hydrogène sous une forte pression, à haute température. L'hydrogène atomique ne manque pas, dans ces conditions, de migrer au travers du revêtement 2 et :
- d'une part, de se piéger à l'interface revêtement 2/paroi externe 1, en générant des poches 4 d'hydrogène moléculaire (voire de méthane). Ledit hydrogène moléculaire résulte ici d'une recombinaison non contrôlée. Lesdites poches de gaz provoquent des fissurations de ladite interface, voire son décollement. (Ladite interface est par ailleurs soumise à des contraintes provoquées par les dilatations thermiques différentielles des matériaux, lors des évolutions de températures) ;
- d'autre part, de pénétrer et de migrer dans la paroi externe 1 et de générer au sein de celle-ci des poches de méthane 5. Les contraintes, exercées par lesdites poches de gaz, à très haute pression, s'ajoutent aux contraintes de fluage pour provoquer des fissurations de ladite paroi externe 1. On a représenté en 6 une telle fissuration.

Pour prendre en compte l'attaque par l'hydrogène, on a prévu une paroi externe 1 très épaisse.

Par ailleurs, dans ce type de réacteur, le transfert thermique de la paroi interne 2 vers ladite paroi externe 1 se fait par conduction.

Sur les figures 3 et 4, on a représenté :
- en 10, la paroi externe d'un réacteur de l'invention,
- en 20, la paroi interne dudit réacteur,
- en 30, le volume réactionnel,
- en 50, l'espace libre ménagé de façon caractéristique entre lesdites parois externe 10 et interne 20.

Ledit espace libre 50, en permettant la recombinaison de l'hydrogène atomique (H) qui a diffusé au travers de la paroi interne 20 et son évacuation, protège dudit hydrogène la paroi externe 10. Il permet également de maintenir ladite paroi externe 10 à une température inférieure à celle de la paroi interne 20, du fait de l'interruption du transfert thermique par conduction.

Ladite paroi interne 20 est maintenue dans des conditions de pression hydrostatique par l'intervention du fluide d'équilibrage des pressions F. La circulation dudit fluide F, symbolisée par la flèche, assure l'évacuation de l'hydrogène qui a diffusé au travers de la paroi interne 20. Ledit fluide F est introduit par l'orifice (51) et évacué, chargé en hydrogène, par l'orifice (52).

## Revendications

1. Réacteur d'hydrogénation comportant une double paroi; ladite double paroi consistant en une paroi externe (10) apte à supporter les charges mécaniques et une paroi interne (20) délimitant le volume réactionnel (30) au sein duquel est appelé à réagir un milieu réactionnel, ladite paroi interne (20) résistant audit milieu réactionnel et protégeant ladite paroi externe (10) de tout contact avec celui-ci, ledit réacteur étant caractérisé en ce qu'un espace (50) est aménagé entre lesdites parois externe (10) et interne (20), pour la recombinaison contrôlée de l'hydrogène atomique appelé à diffuser au travers de ladite paroi interne (20); ledit espace (50) ne renfermant aucun moyen susceptible d'assurer la diffusion dudit hydrogène atomique de ladite paroi interne (20) vers ladite paroi externe (10);
et en ce que sa structure inclut des moyens pour, lors de l'utilisation dudit réacteur, équilibrer les pressions de part et d'autre de ladite paroi interne (20) et permettre la circulation et l'évacuation vers l'extérieur de l'hydrogène ayant accédé audit espace (50).

2. Réacteur d'hydrogénation selon la revendication 1, caractérisé en ce que ledit espace (50) est divisé en plusieurs chambres par au moins une paroi additionnelle; des moyens étant prévus pour, lors de l'utilisation dudit réacteur, équilibrer les pressions de part et d'autre de ladite paroi additionnelle et évacuer vers l'extérieur, de chacune desdites chambres, l'hydrogène y ayant accédé.

3. Réacteur d'hydrogénation selon l'une des revendications 1 ou 2, caractérisé en ce que l'une au moins des parois choisie parmi ladite paroi interne (20) et le cas échéant la(les) paroi(s) additionnelle(s) est à base d'un matériau présentant une faible perméabilité à l'hydrogène.

4. Réacteur d'hydrogénation selon l'une quelconque des revendications 1 à 3, caractérisé en ce que lesdits moyens comprennent au moins un orifice d'amenée (51) d'un fluide (F) d'équilibrage de pression dans ledit espace (50) et le cas échéant au moins un orifice d'amenée d'un fluide (F) d'équilibrage de pression dans chacune des chambres dudit espace (50).

5. Réacteur d'hydrogénation selon la revendication 4, caractérisé en ce que lesdits moyens comprennent au moins un orifice d'amenée (51) et au moins un orifice de sortie (52) d'un fluide (F) d'équilibrage de pression dans ledit espace (50), le cas échéant dans chacune des chambres dudit espace (50).

6. Réacteur d'hydrogénation selon l'une quelconque des revendications 1 à 3, caractérisé en ce que lesdits moyens comprennent une structure rigide présentant une forte porosité ouverte en un matériau dans lequel l'hydrogène atomique est très faiblement soluble, disposée dans ledit espace (50), le cas échéant, dans chacune des chambres dudit espace (50) et au moins un orifice mettant en communication ledit espace (50), le cas échéant chacune des chambres dudit espace (50), avec l'atmosphère ambiante.

7. Réacteur d'hydrogénation selon la revendication 6, caractérisé en ce qu'au moins deux orifices mettent en communication ledit espace (50), le cas échéant, chacune des chambres dudit espace (50), avec l'atmosphère ambiante.

8. Procédé d'hydrogénation caractérisé en ce qu'il est mis en oeuvre dans un réacteur selon l'une quelconque des revendications 1 à 7.

9. Procédé d'hydrogénation selon la revendication 8, caractérisé en ce qu'il est mis en oeuvre dans un réacteur selon l'une des revendications 4 ou 5, ladite paroi interne (20) et le cas échéant la(les)dite(s) paroi(s) additionnelle(s) étant maintenue(s) dans des conditions de pression hydrostatique par intervention d'au moins un fluide (F), dans ledit espace (50); le cas échéant dans chacune des chambres dudit espace (50); ledit fluide (F) étant renouvelé en continu ou en discontinu.

10. Procédé d'hydrogénation selon la revendication 9, caractérisé en ce que le fluide (F) intervenant est l'argon.

11. Procédé d'hydrogénation selon l'une des revendications 9 ou 10, caractérisé en ce qu'il est mis en oeuvre dans un réacteur dont l'espace libre (50) est divisé en plusieurs chambres; au moins deux fluides différents intervenant dans lesdites chambres et/ou le même fluide ou au moins deux fluides différents intervenant dans des conditions de circulation différentes.

12. Procédé d'hydrogénation selon la revendication 8, caractérisé en ce qu'il est mis en oeuvre dans un réacteur selon la revendication 7, un fluide de balayage étant mis en circulation au sein de ladite structure rigide, en continu ou en discontinu.

13. Utilisation d'un réacteur selon l'une quelconque des revendications 1 à 7, pour mettre en oeuvre des réactions d'hydrogénation, pour stocker de l'hydrogène ou des gaz contenant de l'hydrogène dans des conditions de température et de pression d'hydrogène sévères, pour réaliser des études physico-chimiques dans des conditions de température et de pression d'hydrogène sévères.

## Patentansprüche

1. Hydrierungsreaktor mit einer Doppelwand, wobei diese Doppelwand aus einer äußeren Wand (10) zur Aufnahme der mechanischen Belastungen und einer inneren Wand (20) besteht, die das Reaktionsvolumen (30) begrenzt, in dessen Innerem ein Reaktionsmedium reagieren soll, wobei die innere Wand (20) gegenüber dem Reaktionsmittel beständig ist und die äußere Wand (10) vor jeglichem Kontakt mit diesem schützt, dadurch gekennzeichnet, dass zwischen der äußeren (10) und der inneren (20) Wand ein Raum (50) zur kontrollierten Rekombination des atomaren Wasserstoffs vorgesehen ist, der durch die innere Wand (20) diffundieren soll, wobei der Raum (50) keinerlei Mittel einschließt, das die Diffusion des atomaren Wasserstoffs von der inneren Wand (20) zur äußeren Wand (10) gewährleisten kann, und dass sein Aufbau Mittel zum Ausgleichen der Drücke beidseits der inneren Wand (20) und zur Gewährleistung der Zirkulation und Evakuierung des in den Raum (50) eingetretenen Wasserstoffs nach außen während des Betriebes des Reaktors aufweist.

2. Hydrierungsreaktor nach Anspruch 1, dadurch gekennzeichnet, dass der Raum (50) durch zumindest eine zusätzliche Wand in mehrere Kammern geteilt ist, wobei Mittel zum Ausgleichen der Drücke beidseits der zusätzlichen Wand und zur Evakuierung des dort eingetretenen Wasserstoffs von jeder dieser Kammern nach außen während des Betriebs des Reaktors vorgesehen sind.

3. Hydrierungsreaktor nach einem der Ansprüche 1 oder 2, dadurch gekennzeichnet, dass zumindest eine der Wände, ausgewählt aus der inneren Wand (20) und gegebenenfalls der zusätzlichen Wand (Wände), auf Basis eines Materials mit einer geringen Permeabilität für Wasserstoff ausgebildet ist.

4. Hydrierungsreaktor nach einem der Ansprüche 1 bis 3, dadurch gekennzeichnet, dass die Mittel zumindest eine Öffnung (51) zur Zuleitung eines Fluids (F) zum Druckausgleich in dem Raum (50) und gegebenenfalls zumindest eine Öffnung zur Zuleitung eines Fluids (F) zum Druckausgleich in jeder der Kammern des Raumes (50) umfassen.

5. Hydrierungsreaktor nach Anspruch 4, dadurch gekennzeichnet, dass die Mittel zumindest eine Zuleitungsöffnung (51) und zumindest eine Auslassöffnung (52) für ein Fluid (F) zum Druckausgleich in dem Raum (50), gegebenenfalls in jeder der Kammern des Raumes (50), umfassen.

6. Hydrierungsreaktor nach einem der Ansprüche 1 bis 3, dadurch gekennzeichnet, dass die Mittel einen starren Aufbau mit einer starken Offenporigkeit aus einem Material, in dem der atomare Wasserstoff sehr schwach löslich ist, der in dem Raum (50), gegebenenfalls in jeder der Kammern des Raumes (50), angeordnet ist, und zumindest eine Öffnung aufweisen, die den Raum (50), gegebenenfalls jede der Kammern des Raumes (50), mit der Umgebungsatmosphäre verbindet.

7. Hydrierungsreaktor nach Anspruch 6, dadurch gekennzeichnet, dass zumindest zwei Öffnungen den Raum (50), gegebenenfalls jede der Kammern des Raumes (50), mit der Umgebungsatmosphäre verbinden.

8. Hydrierungsverfahren, dadurch gekennzeichnet, dass es in einem Reaktor nach einem der Ansprüche 1 bis 7 durchgeführt wird.

9. Hydrierungsverfahren nach Anspruch 8, dadurch gekennzeichnet, dass es in einem Reaktor nach einem der Ansprüche 4 oder 5 durchgeführt wird, wobei die innere Wand (20) und gegebenenfalls die zusätzliche(n) Wand (Wände) mittels Einwirkung zumindest eines Fluids (F) in dem Raum (50), gegebenenfalls in jeder der Kammern des Raumes (50), unter Bedingungen mit hydrostatischem Druck gehalten wird (werden), wobei das Fluid (F) kontinuierlich oder diskontinuierlich erneuert wird.

10. Hydrierungsverfahren nach Anspruch 9, dadurch gekennzeichnet, dass das einwirkende Fluid (F) Argon ist.

11. Hydrierungsverfahren nach einem der Ansprüche 9 oder 10, dadurch gekennzeichnet, dass es in einem Reaktor durchgeführt wird, dessen freier Raum (50) in mehrere Kammern geteilt ist, wobei zumindest zwei verschiedene Fluide in den Kammern einwirken und/oder dasselbe Fluid oder zumindest zwei verschiedene Fluide unter unterschiedlichen Zirkulationsbedingungen einwirken.

12. Hydrierungsverfahren nach Anspruch 8, dadurch gekennzeichnet, dass es in einem Reaktor nach Anspruch 7 durchgeführt wird, wobei ein Reinigungsfluid innerhalb des starren Aufbaus kontinuierlich oder diskontinuierlich in Zirkulation gebracht wird.

13. Verwendung eines Reaktors nach einem der Ansprüche 1 bis 7 zur Durchführung von Hydrierungsreaktionen, zur Speicherung von Wasserstoff oder von Wasserstoff enthaltenden Gasen unter schwierigen Temperatur- und Wasserstoff-Druckbedingungen, zur Durchführung von physikalisch-chemischen Studien unter harten Temperatur- und Wasserstoff-Druckbedingungen.

## Claims

1. A hydrogenation reactor having a double wall, said double wall consisting in an outer wall (10) suitable for withstanding mechanical loads and an inner wall (20) defining a reaction volume (30) within which a reaction medium is to be caused to react, said inner wall (20) withstanding said reaction medium and protecting said outer wall (10) from any contact therewith, said reactor being characterized in that a space (50) is provided between said outer and inner walls (10, 20) for controlled recombination of atomic hydrogen which will be caused to diffuse through said inner wall (20); said space (50) not containing any means suitable for enabling said atomic hydrogen to diffuse from said inner wall (20) to said outer wall (10) ;
and in that the structure of said reactor includes means for operating while said reactor is in use to balance pressures on either side of said inner wall (20) and to enable hydrogen that has reached said space (50) to circulate and be exhausted to the outside.

2. The hydrogenation reactor according to claim 1, characterized in that said space (50) is subdivided into a plurality of chambers by means of at least one additional wall, means being provided for operating while said reactor is in use to balance pressures on either side of said additional wall and to exhaust the hydrogen that has reached each of said chambers to the outside.

3. The hydrogenation reactor according to claim 1 or 2, characterized in that at least one of walls selected from said inner wall (20) and any additional wall is based on a material having low permeability to hydrogen.

4. The hydrogenation reactor according to any one of claims 1 to 3, characterized in that said means comprise at least one feed orifice (51) for feeding a pressure-balancing fluid (F) into said space (50) and where appropriate at least one feed orifice for feeding a pressure-balancing fluid (F) into each of the chambers of said space (50).

5. The hydrogenation reactor according to claim 4, characterized in that said means comprise at least one feed orifice (51) and at least one outlet orifice (52) for a pressure-balancing fluid (F) in said space (50), and where appropriate in each of the chambers of said space (50).

6. The hydrogenation reactor according to any one of claims 1 to 3, characterized in that said means comprise a rigid structure having a high degree of open porosity and made of a material in which atomic hydrogen has very low solubility, said structure being disposed in said space (50), and where appropriate in each of the chambers of said space (50), and at least one orifice putting said space (50), and where appropriate each of the chambers of said space (50), into communication with the surrounding atmosphere.

7. The hydrogenation reactor according to claim 6, characterized in that at least two orifices put said space (50), and where appropriate each of the chambers of said space (50), into communication with the surrounding atmosphere.

8. A hydrogenation method, characterized in that it is implemented in a reactor according to any one of claims 1 to 7.

9. The hydrogenation method according to claim 8, characterized in that it is implemented in a reactor according to claim 4 or 5, said inner wall (20), and where appropriate any additional wall, being maintained under hydrostatic pressure conditions by using at least one fluid (F) in said space (50), and where appropriate in each of the chambers of said space (50); said fluid (F) being renewed continuously or discontinuously.

10. The hydrogenation method according to claim 9, characterized in that the fluid (F) used is argon.

11. The hydrogenation method according to claim 9 or 10, characterized in that it is implemented in a reactor whose empty space (50) is subdivided into a plurality of chambers, at least two different fluids being used in said chambers and/or the same fluid or at least two different fluids being used under different circulation conditions.

12. The hydrogenation method according to claim 8, characterized in that it is implemented in a reactor according to claim 7, a sweeping fluid being put into circulation within said rigid structure, continuously or discontinuously.

13. Use of a reactor according to any one of claims 1 to 7 for implementing hydrogenation reactions, for storing hydrogen or gases containing hydrogen under severe conditions of temperature and hydrogen pressure, or for performing physico-chemical investigations under severe conditions of temperature and hydrogen pressure.
